# EUROPEAN PATENT APPLICATION

(11) **EP 2 360 564 A1**
(43) Date of publication of application: **24.08.2011**
(21) Application number: 10196381.7
(22) Date of filing: 22.12.2010
(51) Int. Cl.: G06F 3/048

(54) **Mobile terminal and information display method**

(30) Priority: 29.01.2010 KR 20100008451
(71) Applicant: PANTECH CO., LTD., Seoul 121-792 (KR)
(72) Inventor: Oh, Jang Wook, Seoul 140-748 (KR); Won, Hyun Jun, Seoul 150-832 (KR); Kim, Hyae Ran, Gyeonggi-do 435-709 (KR); Kim, Kuk Jin, Seoul 133-777 (KR); Bang, Kyoung Su, Seoul 151-891 (KR)
(74) Representative: Herzog, Markus

(57) **Abstract**

A mobile terminal includes a display unit to display information processed by the mobile terminal, the display unit comprising a touch panel; and a control unit to control the display to display first information in a first direction if a first drag is detected and to display second information in a second direction different from the first direction while the first information is displayed if a second drag is detected. An information display method for a mobile terminal includes displaying first information in a first direction in response to a first drag; and displaying second information in a second direction different from the first direction in response to a second drag while the first information is displayed.

## Description

### CROSS-REFERENCE TO RELATED APPLICATION

This application claims priority from and the benefit under 35 U.S.C. §119(a) of Korean Patent Application No. 10-2010-0008451, filed on January 29, 2010, the disclosure of which is incorporated herein by reference for all purposes.

### BACKGROUND

1. Field

This disclosure relates to a mobile terminal and an information display method for the mobile terminal.

2. Description of the Background

With the rapid development of the mobile communication technology and related infrastructures, mobile terminals have been developed as media for providing various services, such as games, message sending/reception, Internet search, wireless data communication, electric organizers, digital cameras, video phone calls, voice phone calls, and the like.

Recently, with the increased demands of users for improved service qualities and functions, attempts have been made to enhance convenience of users by providing graphical user interfaces (GUI) that are similar to those adopted in personal computers (PC) and touch panels to mobile terminals.

A mobile terminal having a touch panel accepts touch inputs via the touch panel instead of a keypad that is generally used. The touch panel generates a signal or a command in accordance with a predetermined voltage or current signal at a position touched by a touch pen or a finger. The touch panel has advantages in that the user can conveniently input desired information using the pen or finger as an input unit.

However, the existing touch panel is simply used to serve as the keypad of the mobile terminal and only has a limited function of recognizing a command input by the user, and various applications for enhancing the convenience of the user are needed.

### SUMMARY

Exemplary embodiments of the present invention provide a mobile terminal and an information display method using the mobile terminal, which expands information displayed on the mobile terminal in a three-dimensional or a radial pattern.

Additional features of the invention will be set forth in the description which follows, and in part will be apparent from the description, or may be learned by practice of the invention.

An exemplary embodiment provides a mobile terminal including: a display unit to display information processed by the mobile terminal, the display unit comprising a touch panel; and a control unit to control the display unit to display first information in a first direction if a first drag is detected and to display second information in a second direction different from the first direction while the first information is displayed if a second drag is detected. An exemplary embodiment provides an information display method for a mobile terminal, the method including displaying first information in a first direction in response to a first drag; and displaying second information in a second direction different from the first direction in response to a second drag while the first information is displayed.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram illustrating a configuration of a mobile terminal according to an exemplary embodiment.

FIG. 2 is a diagram illustrating a display screen of a mobile terminal that displays information in a three-dimensional pattern according to an exemplary embodiment.

FIG. 3 is a diagram illustrating a display screen of a mobile terminal that displays information as rotatable cubes according to an exemplary embodiment.

FIG. 4A and FIG. 4B are diagrams illustrating display screens of a mobile terminal that displays information in various manners according to exemplary embodiments.

FIG. 5 is a diagram illustrating a display screen of a mobile terminal that displays information having an animation effect according to an exemplary embodiment.

FIG. 6 is a flowchart of a method for displaying information for the mobile terminal according to an exemplary embodiment.

### DETAILED DESCRIPTION OF THE ILLUSTRATED EMBODIMENTS

The invention is described more fully hereinafter with reference to the accompanying drawings, in which exemplary embodiments are shown. This invention may, however, be embodied in many different forms and should not be construed as limited to the exemplary embodiments set forth therein. Rather, these exemplary embodiments are provided so that this disclosure will be thorough, and will fully convey the scope of the invention to those skilled in the art. In the description, details of well-known features and techniques may be omitted to avoid unnecessarily obscuring the presented embodiments.

The terminology used herein is for the purpose of describing particular embodiments only and is not intended to be limiting of this disclosure. As used herein, the singular forms "a", "an", and "the" are intended to include the plural forms as well, unless the context clearly indicates otherwise. Furthermore, the use of the terms "a", "an", etc. do not denote a limitation of quantity, but rather denote the presence of at least one of the referenced item. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In the drawings, like reference numerals denote like elements. The shape, size, and regions, and the like, of the drawing may be exaggerated for clarity.

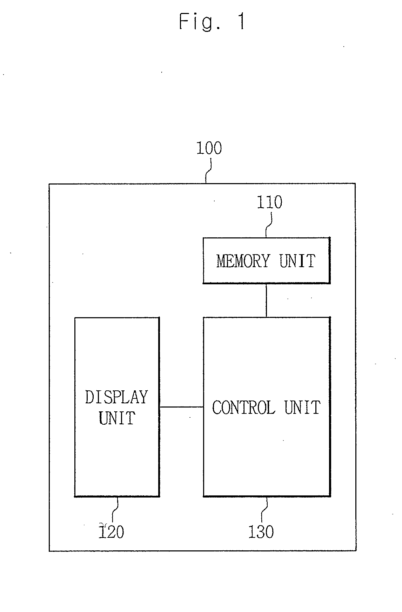

FIG. 1 is a diagram illustrating a configuration of a mobile terminal according to an exemplary embodiment. Referring to FIG. 1, a mobile terminal 100 includes a memory unit 110, a display unit 120, and a control unit 130.

The memory unit 110 may store programs to operate the mobile terminal 100 and may store data input to and output from the mobile terminal 100. The memory unit 110 may be a data storage medium, such as flash memory, hard disk type memory, multimedia card type memory, card type memory, random-access memory (RAM), static random access memory (SRAM), read-only memory (ROM), electrically erasable programmable read-only memory (EEPROM), programmable read-only memory (PROM), magnetic memory, magnetic disk, or optical disk, or any combination thereof.

The display unit 120 displays information processed by the mobile terminal 100. Specifically, the display unit 120 displays a user interface and a graphic user interface included in the information processed by the mobile terminal 100. The display unit 120 may be one of a liquid crystal display (LCD), a thin film transistor liquid crystal display (TFT-LCD), a organic light-emitting diode (OLED) display, a flexible display, and a three dimensional (3D) display. In addition, the display unit 120 may include a touch panel to receive an input via a touch while the display unit 120 displays the information processed by the mobile terminal 100. The touch panel may convert a change in pressure applied to a surface of the touch sensor or a change in electrostatic capacity or the like that may occur at a particular site into an electric input signal using a touch sensor to receive an external signal. The touch sensor may be a touch film, a touch sheet, or a touchpad. The touch sensor may detect a touch pressure, a movement of an object after a touch is detected, a touch position, and a touch area. The signal sensed by the touch sensor may be transmitted to a touch controller, and the touch controller may transmit data processed from the sensed signal to the control unit 130.

The control unit 130 generally controls operations of the mobile terminal 100. For example, the control unit 130 may perform or control processes associated with voice phone call, data communication, video phone call, and the like. The control unit 130 may control the information displayed on the display unit 120 according to input directions. The input directions may include various reference axes in a 2D plane or 3D reference axes in a 3D space. For example, the control unit 130 may display the information on an x-axis, a y-axis, and a z-axis that form the 3D space.

Specifically, according to an input signal of a user, the control unit 130 may arrange and control the display unit 120 to display first information in a first direction among the reference axes and second information in a second direction in a radial pattern about the first information. The radial pattern may be a pattern extending from a central point in all directions. The first information and the second information may classify and indicate information displayed on the mobile terminal 100. For example, when the mobile terminal displays a plurality of main menus, a plurality of sub menus included in one of the main menus, and a plurality of items included in one of the sub menus, the control unit 130 may arrange the plurality of main menus as the first information in the x-axis direction, i.e. a first direction. If one of the displayed main menus is selected, the control unit 130 may control the display unit 120 to display a plurality of sub menus included in or associated with the selected main menu as the second information in the y-axis direction, i.e. a second direction. The control unit 130 may control the display unit 120 to repeat the displaying, and accordingly, the control unit 130 may control the display unit 120 to display items included in a selected sub menu or a plurality of sub menus included in another selected main menu as third information in the x-axis, y-axis, or z-axis direction, i.e. a third direction, while the plurality of main menus, i.e. the first information, and the plurality of sub menus included in the selected main menu, i.e. the second information, are displayed.

If a plurality of cubes is arranged, the control unit 130 may control the display unit 120 to display the second information on first sides of the plurality of cubes. Although described herein as cubes, aspects are not limited thereto such that information may be represented as or on geometric prisms or surfaces or any other three-dimensional shape or portion thereof. The first side of the cube is one side from among the sides of the cube and may indicate a front side. When a fourth signal to rotate the cube is input by the user, the control unit 130 rotates and displays the cube and displays fourth information on a second side that is disposed at a position in which the first side has been disposed before the rotation. The fourth information may include selective information classified according to the same processes and standards as those of the second information. For example, when a plurality of sub menus of a selected main menu correspond to the second information, the fourth information may include one of other sub menus of the selected main menu and a plurality of items included in the selected sub menu. In the same manner, the control unit 130 may display the second information on a first portion of a three-dimensional rotation object, rotate and display the three-dimensional rotation object, and display fourth information on a second portion thereof, the second portion being disposed at a position in which the first portion had been disposed.

The control unit 130 may control the display unit 120 to display various animation effects for the displayed information. As an example of the animation effect, the control unit 130 may control the display unit 120 to display information arranged in an image having a document or file shape contained in a box. The displayed box is pushed or opened by a drag, the documents included in the box are arranged, and information to be displayed is positioned in the arranged documents.

Further, if third information is to be displayed by a third signal while first information and second information are displayed by a first signal and a second signal, respectively, the control unit 130 may control the display unit 120 to display the third information while removing at least portions of the first information and/or the second information previously displayed or may control the display unit to display the third information at areas in which the first information and the second information are not displayed. The control unit 130 may fix the displayed information according to an operation of the user, and the control unit 130 may control the display unit 120 to display the third information in areas in which no other information is displayed. In addition, the control unit 130 may control the display unit 120 to zoom in or zoom out a part or the entire of the display screen.

The control unit 130 may control the display unit 120 to display an icon for directly executing an application allocated to each icon as well as information displayed in reference axes directions on the display unit 120. Examples of the icon may include a home icon for directly entering a basic reception waiting screen or a main menu display screen, an enter icon for entering a particular menu, and a return icon for returning to a previously executed screen. The control unit 130 may further include additional information displayed in the reference axes directions on the display unit 120. Examples of the additional information may include information regarding axes of the displayed information and information on a screen display ratio.

The control unit 130 may arrange information in an order set in advance. In addition, when the memory unit 100 stores a use frequency of information, the control unit 130 may control to arrange the information in an order of descending or ascending frequency.

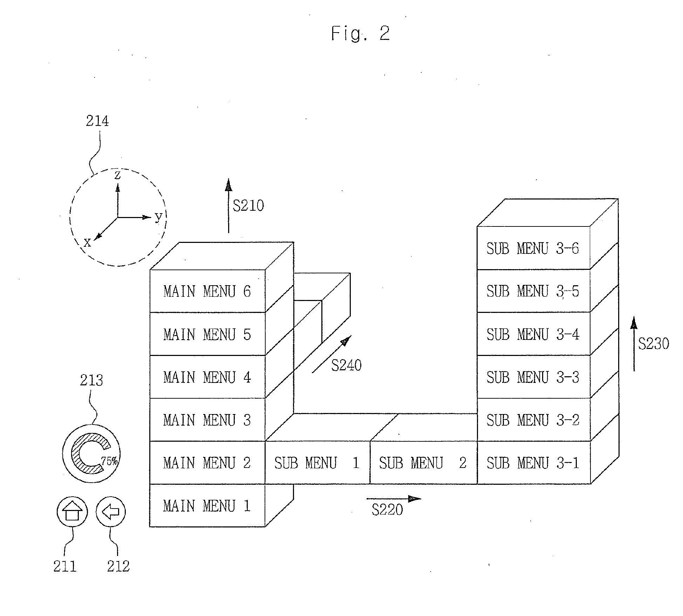

FIG. 2 is a diagram illustrating a display screen of a mobile terminal that displays information in a three-dimensional pattern according to an exemplary embodiment. The three-dimensional pattern may be a radial pattern. Referring to FIG. 2, the mobile terminal displays main menu information and sub menu information as first information and second information, respectively. If a first upward drag (S210) in the z-axis direction is input on the display screen of the mobile terminal, the mobile terminal displays the main menu information (main menus 1 to 6), i.e., the first information, in the z-axis direction in an ascending order according to a drag input signal generated in response to the first upward drag (S210) in the z-axis direction. While the main menu information (main menus 1 to 6) are displayed, if a right drag (S220) is input in the y-axis direction from the main menu 2, the mobile terminal displays the sub menu information (sub menus 1 to 3-1), i.e., the second information included in or associated with the main menu 2 in the right (positive) y-axis direction in an ascending order, according to a drag input signal generated in response to the right drag (S220) in the y-axis direction. While the main menu information (main menus 1 to 6) and the sub menu information (sub menus 1 to 3-1) are displayed, if a second upward drag (S230) is input in the z-axis direction from the sub menu 3-1, the mobile terminal displays detailed information (sub menus 3-1 to 3-6) associated with or included in the sub menu 3-1 (or third information) in the z-axis direction in an ascending order according to a drag input signal generated in response to the second upward drag (S230) in the z-axis direction. If a rearward drag (S240) is input in the x-axis direction from the main menu 4, the mobile terminal displays sub menu information associated with or included in the main menu 4 in the x-axis direction in an ascending order according to a drag input signal generated in response to the rearward drag (S240) in the x-axis direction.

The mobile terminal may further display an initial menu icon 211 to move to or to activate an initial screen, a return icon 212 to enter or to activate a previously executed menu, a ratio icon 213 to zoom in or zoom out the display screen displayed in the three-dimensional or radial pattern, and reference axis information 214 to display three-dimensional or radial reference axes. The mobile terminal may display various types of information in various manners depending on the direction of the input signals and information processed by the mobile terminal.

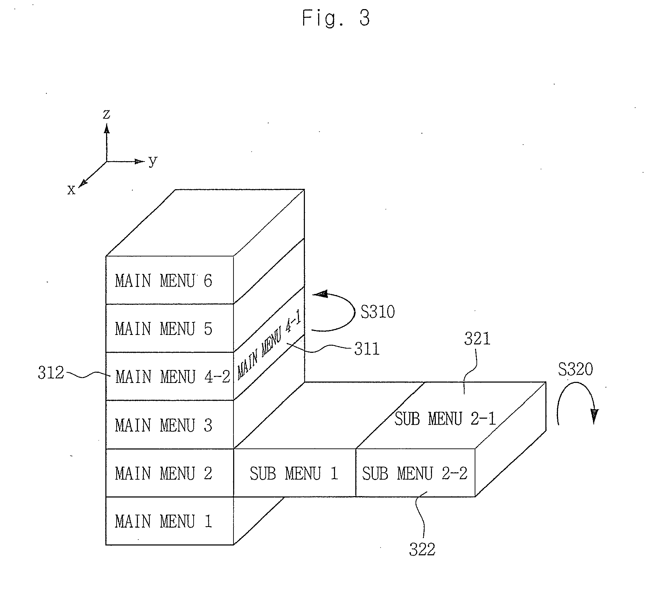

FIG. 3 is a diagram illustrating a display screen of a mobile terminal that displays information as rotatable cubes according to an exemplary embodiment. Referring to FIG. 3, first information is displayed in the z-axis direction in an ascending order according to an input first signal, and second information is displayed in the y-axis direction in an ascending order according to an input second signal as previously described. If a rotation drag (S310) is input in a counterclockwise direction with respect to a main menu 4-1 311 of the first information, the mobile terminal rotates the displayed cubes counterclockwise to display a main menu 4-2 312 on the front side of the cube according to a drag input signal generated in response to the rotation drag (S310). In the same manner, when an upward rotation drag (S230) in the upward direction with respect to a sub menu 2-1 321 is input, the mobile terminal rotates the displayed cubes in the upward direction to display a sub menu 2-2 322 on the front side of the cube according to a drag input signal generated in response to the upward rotation drag (S320). A method of displaying information depending on the 3D reference axes and a type of the displayed information may be modified in various manners according to various applications.

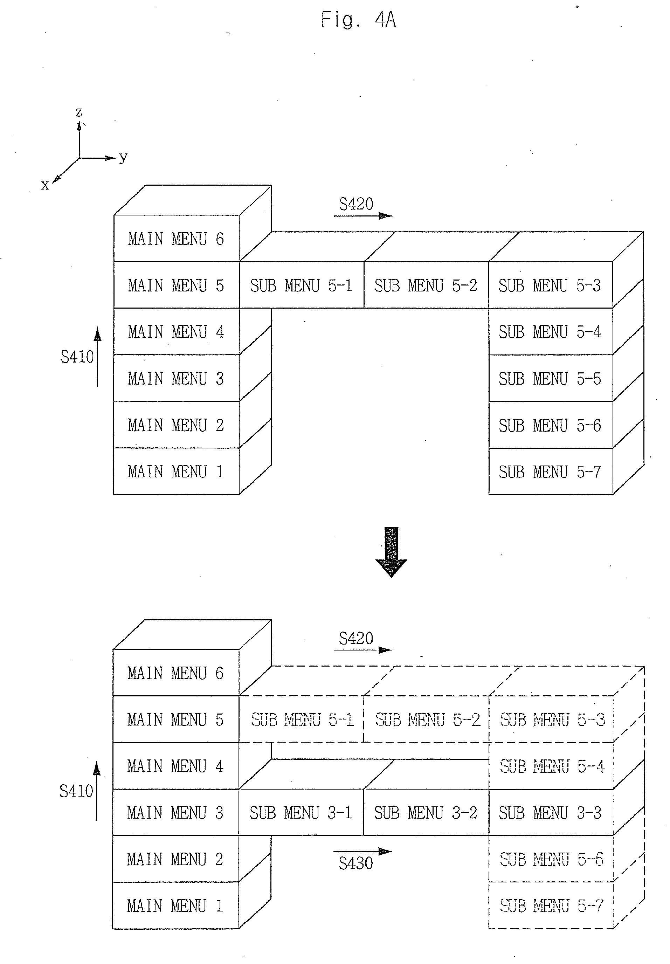

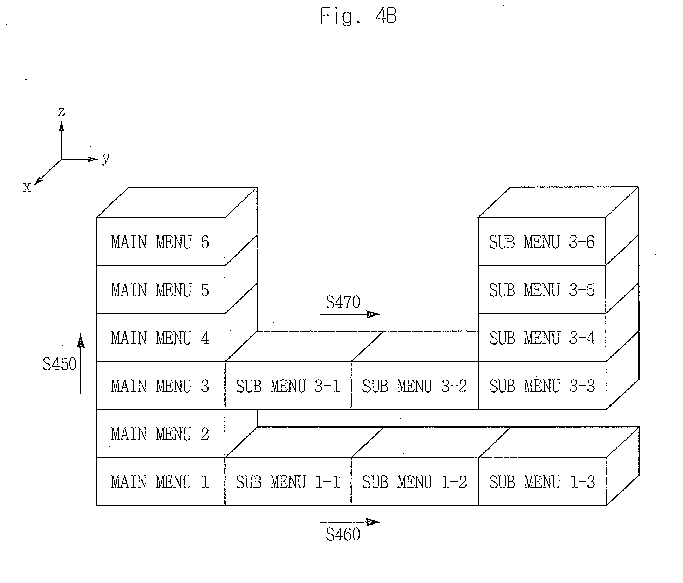

FIG. 4A and FIG. 4B are diagrams illustrating display screens of a mobile terminal that displays information in various manners according to exemplary embodiments. FIG. 4A illustrates the display screen of the mobile terminal displays new information after removing at least a portion of previously displayed information, and FIG. 4B illustrates the display screen of the mobile terminal that displays new information in areas in which the previously displayed information is not displayed.

Referring to FIG. 4A, first information (main menus 1 to 6) is displayed in the z-axis direction in an ascending order according to a first signal generated in response to a first drag (S410), and second information (sub menus 5-1 to 5-7) is displayed in the y-axis direction in an ascending order according to a second signal generated in response to a second drag (S420). Here, the second information is sub menu information included in or associated with main menu 5. If all of the second information cannot be displayed in a same direction, i.e., along the y-axis direction, due to limitations in a screen size, the display direction is changed according to an operation or setting of the user to display the remaining second information. As shown in FIG. 4A, the display direction is changed with respect to the sub menus 5-4 to 5-7, which are displayed in the z-axis direction. Thereafter, if new second information (sub menu information included in or associated with main menu 3) is to be displayed in the y-axis direction in an ascending order by a third signal generated in response to a third drag (S430), an area in which the third information (sub menus 3-1 to 3-3) is to be displayed overlaps with an area in which the second information (sub menus 5-1 to 5-7) was previously displayed. Therefore, the mobile terminal may stop displaying the previously displayed second information (sub menus 5-1 to 5-7) and display the new second information (sub menus 3-1 to 3-3) in the y-axis direction in an ascending order.

Referring to FIG. 4B, first information (main menus 1 to 6) is displayed in the z-axis direction in an ascending order according to a first signal generated in response to a first drag (S450), and second information (sub menus 1-1 to 1-3) is displayed in the y-axis direction in the ascending order according to a second signal generated in response to a second drag (S460). The second information is included in or associated with the main menu 1 of the first information. Here, the first information (main menus 1 to 6) and the second information (sub menus 1-1 to 1-3) may be fixed depending on an operation or setting of the user, and if a third signal is generated in response to an input third drag (S470), the mobile terminal may display new second information (sub menus 3-1 to 3-6) at an area in which the first information (main menus 1 to 6) and the second information (sub menus 1-1 to 1-3) are not displayed. A method of displaying the information and a type of the displayed information may be modified in various manners.

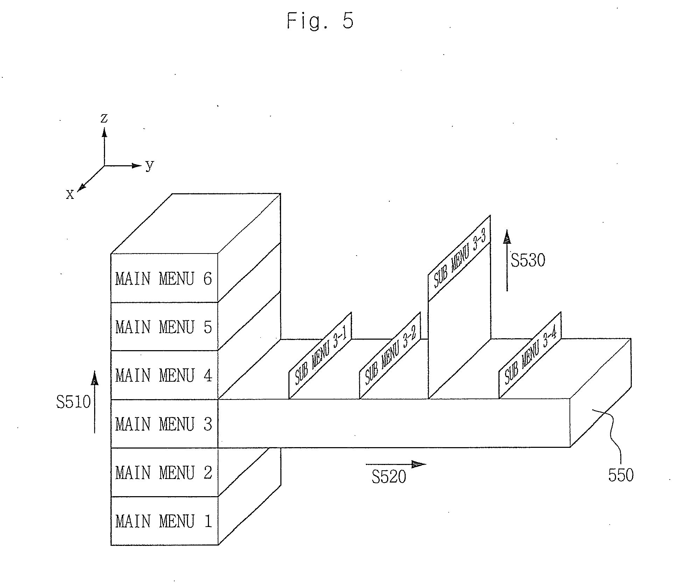

FIG. 5 is a diagram illustrating a display screen of a mobile terminal that displays information having an animation effect according to an exemplary embodiment. Referring to FIG. 5, the mobile terminal displays first information (main menus 1 to 6) in the z-axis direction in an ascending order according to a first signal generated in response to a first drag (S510) and displays second information (sub menu 3-1 to 3-4) in the y-axis direction in an ascending order according to a second signal generated in response to a second drag (S520). The mobile terminal may animate the second information (sub menus 3-1 to 3-4) such that a box 550 including the second information (sub menus 3-1 to 3-4) slides in a direction of the second drag (S520) and displays contents of the second information (sub menus 3-1 to 3-4) as files included in the box 550. The mobile terminal slides a selected file (sub menu 3-3 as shown in FIG. 5) upward according to a selection signal generated in response to a third drag (S530) to further display detailed information on the selected second information (sub menus 3-1 to 3-4) on areas of the files. An effect of displaying the information and a type of the displayed information may be modified in various manners.

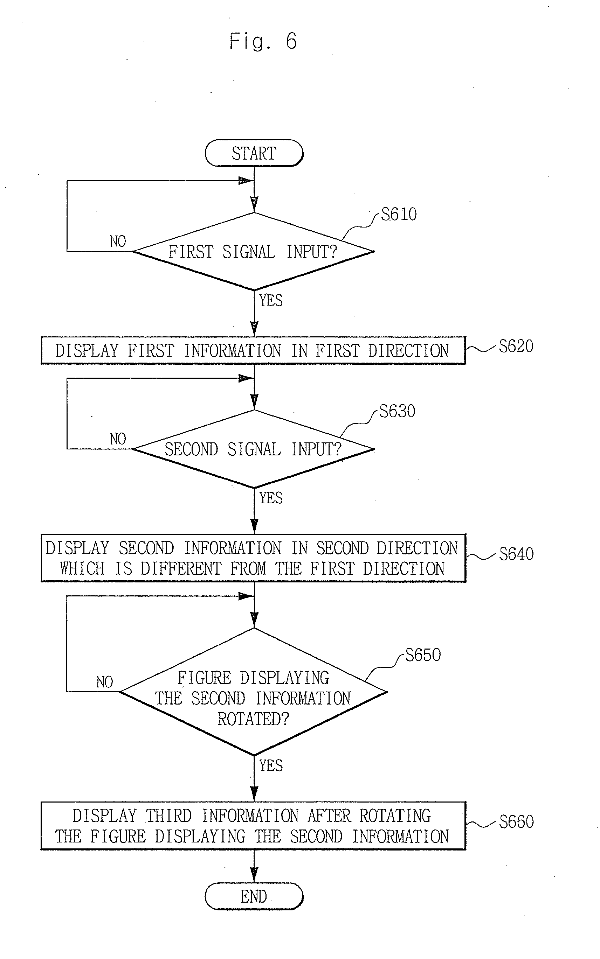

FIG. 6 is a flowchart of a method for displaying information for the mobile terminal according to an exemplary embodiment. Referring to FIG. 6, if a first signal is detected (S610), first information is displayed in a first direction (S620), and if the second signal is detected (S630), second information is displayed in a second direction that is different from the first direction while the first information is displayed (S640). The first information and the second information may be displayed on a single or a plurality of cubes or on a rotation object, and if a third signal that is a signal for rotating the cubes or the rotation object is detected while the first information and the second information are displayed (S650), the third information is displayed after the figure, i.e., the cubes or the rotation object is rotated (S660).

In addition, if the fourth signal is input while the first information and the second information are displayed, a process of not displaying the previously displayed first information or the previously displayed second information and a process of displaying the fourth information in a third direction may further be included. The third direction may be a same direction as or a different direction from the first and second directions.

Furthermore, if the fourth signal is input while the first information and the second information are displayed, a process of displaying the fourth information in a third direction at areas in which the first information and second information are not previously displayed may further be included.

The mobile terminal and the information display method using the same are not limited to the configurations and methods of the exemplary embodiments described above and may be configured to selectively combine the entire or parts of the exemplary embodiments so as to implement various modifications of the exemplary embodiments.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A mobile terminal includes a display unit to display information processed by the mobile terminal, the display unit comprising a touch panel; and a control unit to control the display to display first information in a first direction if a first drag is detected and to display second information in a second direction different from the first direction while the first information is displayed if a second drag is detected. An information display method for a mobile terminal includes displaying first information in a first direction in response to a first drag; and displaying second information in a second direction different from the first direction in response to a second drag while the first information is displayed.

## Claims

1. A mobile terminal, comprising:
a display unit to display information processed by the mobile terminal, the display unit comprising a touch panel; and
a control unit to control the display unit to display first information in a first direction if a first drag is detected and to display second information in a second direction different from the first direction while the first information is displayed if a second drag is detected.

2. The mobile terminal of claim 1, wherein the first direction and the second direction are either determined by a direction of the first drag and the second drag, respectively, or axes of a three-dimensional space.

3. The mobile terminal of claim 1 or 2, wherein the second information is displayed on a first side of a single cube or a plurality of cubes, and third information is displayed on a second side of the single cube or the plurality of cubes, preferably while the single cube or the plurality of cubes are rotated if a rotation drag is detected.

4. The mobile terminal of any of claims 1 to 3, wherein the second information is displayed on a first portion of a three-dimensional rotation object and third information is displayed on a second portion of the three-dimensional rotation object, preferably while the three-dimensional rotation object is rotated if a rotation drag is detected.

5. The mobile terminal of any of claims 1 to 4, wherein at least a portion of the displayed second information is not displayed if a third drag is detected to display third information.

6. The mobile terminal of any of claims 1 to 5, wherein third information is displayed in a third direction different from the first and second directions.

7. The mobile terminal of any of claims 1 to 6, wherein the first information is main menu information and the second information is sub menu information associated with a selected main menu information.

8. The mobile terminal of any of claims 1 to 7, wherein the control unit controls the display unit to display an icon to execute an application associated with the icon.

9. The mobile terminal of any of claims 1 to 8, wherein the first information or second information is displayed either in an order set by a user or according to an animation effect.

10. The mobile terminal of any of claims 1 to 9, wherein control unit controls the display unit to display third information in a third direction different from the first direction and the second direction if a third drag is detected,
and, preferably, the first information is main menu information, the second information is sub menu information associated with a selected main menu information of the first information, and the third information is sub menu information associated with a selected sub menu information of the second information.

11. The mobile terminal of any of claims 1 to 10, wherein the first information and the second information are rotated if a rotation drag is detected.

12. The mobile terminal of any of claims 1 to 11, wherein the second information is animated to extend in the second direction from the first information.

13. An information display method for a mobile terminal, the method comprising:
displaying first information in a first direction in response to a first drag; and
displaying second information in a second direction different from the first direction in response to a second drag while the first information is displayed.

14. The information display method of claim 13, wherein the first direction and the second direction are either respectively determined according to directions of the first drag and the second drag or axes of a three-dimensional space.

15. The information display method of claim 13 and 14, wherein the displaying of the second information further comprises:
either displaying the second information on a first side of a single cube or a plurality of cubes, and displaying third information on a second side of the single cube or the plurality of cubes in response to a third drag,
or displaying the second information on a first portion of a three-dimensional rotation object, and displaying third information on a second portion of the three-dimensional rotation object in response to a third drag.

16. The information display method of any of claims 13 to 15, wherein the displaying of the second information further comprises:
either displaying third information in a third direction in response to a third drag and not displaying at least a part of the displayed second information,
or displaying third information in a third direction in an area in which the first information and the second information are not displayed in response to a third drag.

17. The information display method of any of claims 13 to 16, wherein the first information is main menu information, and the second information is sub menu information associated with a selected main menu information of the first information.

18. The information display method of any of claims 13 to 17, further comprising
displaying third information in a third direction different from the first direction and the second direction in response to a third drag,
and, preferably, the first information is main menu information, and the second information is sub menu information associated with a selected main menu information of the first information, and the third information is sub menu information associated with a selected sub menu information of the second information.

19. The information display method of any of claims 13 to 18, further comprising
rotating the displayed first information and the displayed second information in response to a rotation drag.

20. The information display method of any of claims 13 to 19, further comprising
animating the displaying of the second information, the animating comprising extending the second information in the second direction from the first information.
